# EUROPEAN PATENT SPECIFICATION

(11) **EP 4 542 422 B1**
(45) Date of publication and mention of the grant of the patent: **15.07.2026**
(21) Application number: 23204970.0
(22) Date of filing: 20.10.2023
(51) Int. Cl.: G06V 20/58, G06V 10/764, G06V 10/778, G06F 18/21, G06F 18/2433

(54) **A COMPUTER IMPLEMENTED METHOD FOR PROVIDING INSIGHT INTO MACHINE LEARNING MODELS**
COMPUTERIMPLEMENTIERTES VERFAHREN ZUR BEREITSTELLUNG VON EINSICHTEN IN MASCHINENLERNMODELLE
PROCÉDÉ MIS EN UVRE PAR ORDINATEUR POUR FOURNIR UNE CONNAISSANCE DANS DES MODÈLES D'APPRENTISSAGE AUTOMATIQUE

(43) Date of publication of application: 23.04.2025
(73) Proprietor: Zenseact AB, 417 56 Göteborg (SE)
(72) Inventor: LJUNGBERGH, William, 414 78 Göteborg (SE); VERBEKE, Willem, 412 60 Göteborg (SE)
(74) Representative: Zacco Sweden AB

(56) References cited:
- US-A1- 2022 147 876
- NGUYEN VAN DUONG: "Out-of-Distribution Detection for LiDAR-based 3D Object Detection", 18 January 2022 (2022-01-18), XP093040265, Retrieved from the Internet <URL:https://uwspace.uwaterloo.ca/handle/10012/17902> [retrieved on 20230419]
- MAYURESH SAVARGAONKAR ET AL: "VTrackIt: A Synthetic Self-Driving Dataset with Infrastructure and Pooled Vehicle Information", ARXIV.ORG, CORNELL UNIVERSITY LIBRARY, 201 OLIN LIBRARY CORNELL UNIVERSITY ITHACA, NY 14853, 15 July 2022 (2022-07-15), XP091277884

## Description

### TECHNICAL FIELD

The present inventive concept relates to the field of autonomous vehicles. In particular, it is related to methods and devices for providing insight into machine learning models.

### BACKGROUND

With the development of technology in recent years, image capturing and processing techniques have become widely used in different fields of technology. In particular, vehicles produced today are commonly equipped with some form of vision or perception system for enabling new functionalities. Moreover, an increasing portion of modern vehicles has advanced driver-assistance systems (ADAS) to increase vehicle safety and more generally road safety. ADAS - which for instance may be represented by adaptive cruise control (ACC), collision avoidance system, forward collision warning, lane support systems, etc. - are electronic systems that may aid a driver of the vehicle. Today, there is ongoing research and development within a number of technical areas associated to both the ADAS and the Autonomous Driving (AD) field. ADAS and AD may also be referred to under the common term Automated Driving System (ADS) corresponding to all of the different levels of automation as for example defined by the SAE J3016 levels (0 - 5) of driving automation.

Some functions of these system can be implemented using simple rule-based techniques. However, to handle the complexity of real-world driving scenarios, which involves varying road conditions, unpredictability in human or non-human behavior, and rapidly changing environments, machine learning models can in some cases be used to e.g. improve the capability or performance of the ADS. The machine learning models, such as deep neural networks, are large and complex nonlinear functions allowing them to learn to recognize complex patterns e.g. in sensor data to build an understanding of the world. As an example, the ADS typically comprises a perception system configured to interpret sensory data - relevant for driving of the vehicle - to identify e.g. obstacles, vehicle lanes, relevant signage, appropriate navigation paths etc. These functions may e.g. be performed by machine learning models, such as object detection or classification models. An example of a prior art document is Nguyen Van Duong: "Out-of-Distribution Detection for LiDAR-based 3D Object Detection", 18 January 2022 (2022-01-18), XP093040265, Retrieved from the Internet: URL:https:// uwspace.uwaterloo.ca/handle/10012/17902.

However, the black box nature of these models presents a challenge in understanding how a machine learning model works, and what may be the cause for potential errors or inaccuracies occurring in the output of the model. For example, if the perception system perceives the surrounding environment incorrectly, it can be difficult to determine the cause and how to improve the system. Hence, in the event of an error, identifying its causal factors is challenging due to this lack of transparency.

By being able to identify the cause for such errors, any underlying issues can be solved faster, and consequently further improve any system utilizing such a model. Moreover, providing better understanding of these models can provide for increased productivity, reduction of the amounts of training data that is needed, as well as enabling more precise sourcing of training data. There is therefore a need for new and improved solutions for providing insight into these models to facilitate a deeper understanding of the inner workings of the machine learning models in order to aid in its development.

### SUMMARY

The herein disclosed technology seeks to mitigate, alleviate, or eliminate one or more of the above-identified deficiencies and disadvantages in the prior art to address various problems relating to analyzing of machine learning model performance.

The invention is defined by the appended set of claims.

In some ways, the presently disclosed technology provides insight into model performance by enabling visualization of the inner workings of the machine learning model to aid in this analysis. This new and improved way of providing insight into model performance can be utilized in the further development of these models. More specifically, the presently disclosed technology builds upon the techniques of generative Al to address the above addressed challenges. Generative Al, such as Generative Adversarial Networks or diffusion models, has been used to generate synthetic data for data augmentation or generation of additional training data. However, as realized by the inventors, similar techniques can be utilized in reconstructing the input data to the model in the way that the model sees it. This facilitates a comparison between the original input data and how the model represents the input data internally, to identify potential errors or omissions made by the machine learning model. Various aspects and embodiments of the disclosed invention are defined below and in the accompanying independent and dependent claims.

According to a first aspect, there is provided a computer-implemented method performed in a server. The method comprises obtaining sensor data pertaining to a scene of a surrounding environment of a vehicle equipped with an automated driving system. The method further comprises obtaining, for a machine learning model configured to perform a task of the automated driving system, an internal representation of the sensor data, wherein the internal representation is formed by inputting the sensor data to the machine learning model and extracting the internal representation from said machine learning model. The method further comprises generating synthetic sensor data for subsequent comparison with the obtained sensor data, wherein the synthetic sensor data is generated by inputting the internal representation into a generative model trained to generate synthetic sensor data based on internal representations.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. The above-mentioned features of the first aspect, when applicable, apply to the second aspect as well. In order to avoid undue repetition, reference is made to the above.

According to a third aspect, there is provided a server comprising control circuitry. The control circuitry is configured to obtain sensor data pertaining to a scene of a surrounding environment of a vehicle equipped with an automated driving system. The control circuitry is further configured to obtain, for a machine learning model configured to perform a task of the automated driving system, an internal representation of the sensor data, wherein the internal representation is formed by inputting the sensor data to the machine learning model and extracting the internal representation from said machine learning model. The control circuitry is further configured to generate synthetic sensor data for subsequent comparison with the obtained sensor data, wherein the synthetic sensor data is generated by inputting the internal representation into a generative model trained to generate synthetic sensor data based on internal representations. The above-mentioned features of the first and second aspect, when applicable, apply to this third aspect as well. In order to avoid undue repetition, reference is made to the above.

According to a fourth aspect, there is provided a computer-implemented method performed by a vehicle equipped with an automated driving system. The method comprises, in response to detecting a deviating behavior of the vehicle, obtaining sensor data pertaining to a scene of a surrounding environment at which the deviating behavior was detected. The method further comprises determining, for a machine learning model configured to perform a task of the automated driving system, an internal representation of the sensor data, by inputting the sensor data to the machine learning model and extracting the internal representation from said machine learning model. The method further comprises transmitting the sensor data and the internal representation of the sensor data to a server for subsequent generation of synthetic sensor data based on the internal representation. The above-mentioned features of the previous aspects, when applicable, apply to this fourth aspect as well. In order to avoid undue repetition, reference is made to the above.

According to a fifth aspect, there is provided a computer program product comprising instructions which when the program is executed by a computing device, causes the computing device to carry out the method according to any embodiment of the fourth aspect. According to an alternative embodiment of the fifth aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the fourth aspect. The above-mentioned features of the previous aspects, when applicable, apply to this fifth aspect as well. In order to avoid undue repetition, reference is made to the above.

According to a sixth aspect, there is provided a vehicle equipped with an automated driving system. The vehicle comprises one or more sensors. The vehicle further comprises control circuitry. The control circuitry is configured to, in response to detecting a deviating behavior of the vehicle, obtain sensor data pertaining to a scene of a surrounding environment at which the deviating behavior was detected. The control circuitry is further configured to determine, for a machine learning model configured to perform a task of the automated driving system, an internal representation of the sensor data by inputting the sensor data to the machine learning model and extracting the internal representation from said machine learning model. The control circuitry is further configured to transmit the sensor data and the internal representation of the sensor data to a server for subsequent generation of synthetic sensor data based on the internal representation. The above-mentioned features of the other aspects, when applicable, apply to this sixth aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect. Moreover, any advantages mentioned in connection with one aspect, when applicable, applies to the other aspects as well.

As stated previously, the presently disclosed technology may be advantageous in that it provides for understanding of the workings of machine learning models in the field of autonomous driving. This is achieved by providing insight into the black-box that the machine learning model typically is. An effect of this is that it can help improve the safety, effectiveness and capability of automated driving systems. One possible effect is that it enables identification of potential errors or omissions in the system, such that these can be addressed.

The disclosed technology may be used to analyze scenarios where it can be expected or already known that the machine learning model has made an error. Thereby, ways to improve the model can be identified this way. This can be done by analyzing the differences between the obtained sensor data and the synthetic sensor data. The disclosed technology may also be used reactively, to e.g. raise a flag or give an indication of that something might not be working as it should. In other words, the method can be used to identify that errors has, or are, occurring. This can be done by identifying discrepancies between the obtained sensor data and the synthetic sensor data.

The herein disclosed technology may be further advantageous in that it can provide for collecting relevant training data for improving the machine learning model. More specifically, the subsequent comparison enabled by the generated synthetic sensor data can give an indication of what kind of data that needs to be collected to improve the model, or what the weaknesses of the model are. In other words, from this data, it can be possible to learn how to fix any flaws of the model, either by collecting more training data, or by adjusting the model architecture or algorithms.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will, in the following, be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, performed in a server, according to some embodiments.
Figure 2 is a schematic flowchart representation of a method, performed in a vehicle, according to some embodiments.
Figure 3 is a schematic illustration of a server in accordance with some embodiments.
Figure 4 is a schematic illustration of a vehicle in accordance with some embodiments.
Figure 5A and 5B illustrates, by way of example, original sensor data and synthetic sensor data respectively.
Figure 5C and 5D illustrates, by way of another example, original sensor data and synthetic sensor data respectively.
Figure 6 is a schematic illustration of a distributed system according to some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

As used herein, the wording "one or more of" a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

Several functions of automated driving systems, ADS, of vehicles typically leverages machine learning models to some extent. Throughout the present disclosure, reference is made to such machine learning models configured to perform a task of the ADS. By the wording "machine learning model" any form of machine learning algorithm is herein meant, such as deep learning models, neural networks, or the like. In general, the machine learning model may be any neural network based model which operates on sensor data of an autonomous vehicle. The machine learning model may be a perception model. The perception model herein refers to a computational system or algorithm designed to perceive an environment depicted in sensor data, such as digital images, video frames, LIDAR data, radar data, ultrasonic data, or other types of visual data. In other words, the perception model may be designed to detect, locate, identify and/or recognize instances of specific objects within the sensor data. Thus, the perception model may be configured to perform a perception task of the ADS, such as object detection, object classification, lane estimation, free-space estimation, etc. More specifically, the machine learning model may be an object detection model, an object classification model, a lane estimation model, or a free-space estimation model. The perception model may employ a combination of advanced techniques from computer vision, machine learning, and pattern recognition to analyze the visual sensor data and output e.g. bounding boxes or regions of interest around objects of interest present in the input imagery. The perception model may be further configured to classify what type of object is detected. The perception model may encompass different architectures, including but not limited to convolutional neural networks (CNNs), recurrent neural networks (RNNs), transformers, and other existing or future alternatives.

Automated driving systems typically comprise a perception system configured to interpret sensory data - relevant for driving the vehicle - to identify e.g. obstacles, vehicle lanes, relevant signage, appropriate navigation paths etc. This is usually achieved by a perception model as described above. The perception system is thus critical for the safety and effectiveness of the overall ADS. Thus, it is important that the perception model perceives the surrounding environment correctly, and in case it does not, it is important to know why, and how it can be corrected. However, as with many machine learning models, it can be difficult to know the cause for such errors and how to improve the system. This makes the presently disclosed technology particularly advantageous for these kinds of applications.

The output of the perception model may be used in a downstream task or by a downstream system of the ADS, such as in trajectory prediction, path planning, or emergency brake systems. In some embodiments, the machine learning model is an end-to-end model configured to (as opposed to above) perform both a perception task and a downstream task. For example, the machine learning model may perform trajectory prediction or path planning based on the sensor data directly.

Deployment of a machine learning model typically involves a training phase where the model learns from labeled training data to achieve accurate predictions during the subsequent inference phase. The training data (and input data during inference) may e.g. be an image, or sequence of images, LIDAR data (i.e. a point cloud), radar data etc. Furthermore, the training/input data may comprise a combination or fusion of one or more different data types.

The training/input data may for instance comprise both an image depicting a scene of a surrounding environment of the vehicle, and corresponding LIDAR point cloud of the same scene.

The machine learning model may be implemented in some embodiments using publicly available suitable software development machine learning code elements, for example, such as those which are available in Pytorch, TensorFlow, and Keras, or in any other suitable software development platform, in any manner known to be suitable to someone of ordinary skill in the art.

Throughout the present disclosure, reference will further be made to a generative model. By the wording "generative model" it is herein meant a machine learning model, but with the task of generating data. In other words, the general aspects of machine learning models, as explained above, is applicable also to the generative model. However, the generative model may differ e.g. from perception models (or the machine learning model for which the internal representation is generated) in its architecture and how it is trained. In the present case, the generative model is trained to generate synthetic sensor data based on a certain input, as will be further explained below. The generative model may be a so-called generative adversarial network (GAN). In another example, the generative model may be a so-called diffusion model. These are both well-known models in the art, of which the principles and features are readily understood by the skilled person. It goes without saying that the presently disclosed technology is not limited to these examples, as other types of generative models may be applicable as well.

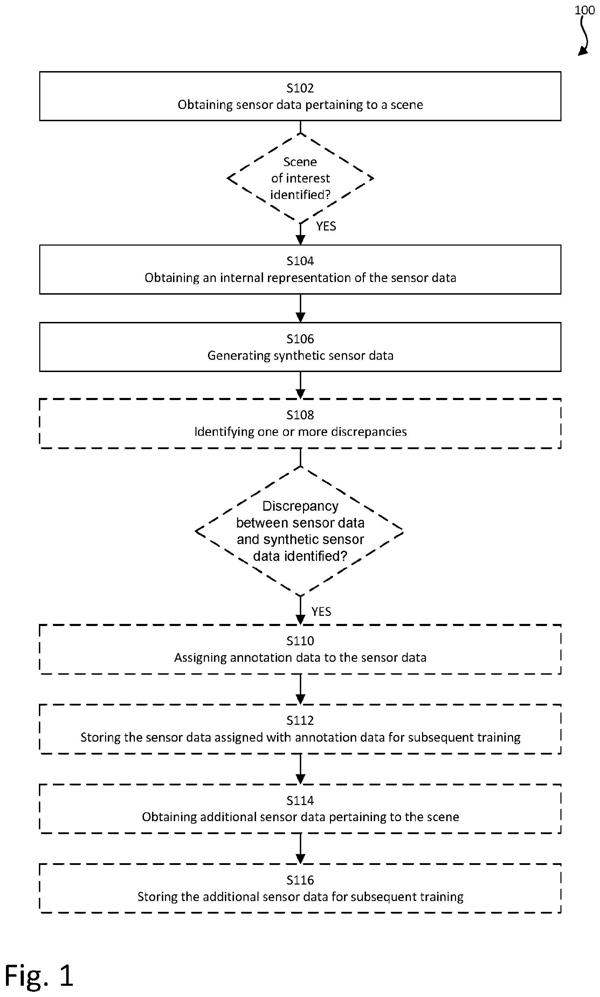

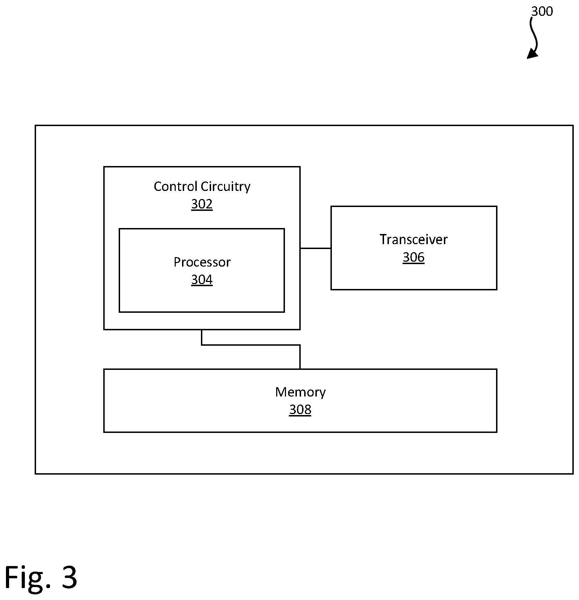

Figure 1 is a schematic flowchart representation of a computer-implemented method 100 according to some embodiments. The method 100 may be performed in a server, such as the server 300 described below in connection with Fig. 3. More generally, the method 100 may be performed by any suitable computing device. Advantageously, the server is a device having more available computational resources than a vehicle equipped with an ADS. This may facilitate deployment a more computational heavy generative model.

The method 100 may be a method for providing insight into a machine learning model, or a performance of the machine learning model. Put differently, the method 100 may be a method for analyzing or visualizing, a cause for a potential error or omission of the machine learning model. Thus, the method can aid in development of the machine learning model or for interpreting the inner workings of the model. The machine learning model may be a perception model, as described in the forgoing.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S110 and S112 may be performed independently of the steps denoted S114 and S116, based on a specific realization. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

The method 100 comprises obtaining S102 sensor data pertaining to a scene of a surrounding environment of a vehicle equipped with an automated driving system. Obtaining S102 the sensor data may comprise receiving the sensor data from the vehicle having collected the sensor data using one or more on-board sensors. The sensor data may comprise one of more of image data (e.g. one or more images, or a video sequence), LIDAR data (i.e. a point cloud), radar data and ultrasonic data. The sensor data may be obtained as raw sensor data. Alternatively, the sensor data may be obtained as processed or fused sensor data of two or more different types of sensor data. The sensor data may further comprise map data or geographical location data (e.g. GPS data) of the vehicle.

The wording "obtaining" is throughout the present disclosure to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. Thus, as used herein, "obtaining" may indicate that a parameter is received at a first entity/unit from a second entity/unit, or that the parameter is determined at the first entity/unit e.g. based on data received from another entity/unit.

The surrounding environment of the vehicle can be understood as a general area around the vehicle in which objects (such as other vehicles, landmarks, obstacles, etc.) can be detected and identified by vehicle sensors (radar sensor, LIDAR sensor, camera(s), etc.), i.e. within a sensor range of the ego-vehicle. The scene may be understood as an area of the surrounding environment depicted in the sensor data. Put differently, the scene may correspond to the area of the surrounding environment of which a task (e.g. a perception task) of the ADS is to be performed. The sensor data pertains to the scene in the sense that the sensor data reflects one or more properties of the scene. Put differently, the sensor data comprises information relating to the scene. The sensor data pertaining to the scene may be any type of data relating to the scene. For example, the sensor data may comprise one or more of image data, LIDAR data, radar data, or ultrasonic data. The image data should herein be understood as one or more images, depicting the scene at which the evasive maneuver was performed. Thus, the image may depict any object present at the scene. The one or more images may constitute a sequence of images. In other words, each image of the sequence of images may depict the scene at different points in time, and/or from different point of views. The sequence of images may thus be understood as a sequence of frames of a video of the scene. Alternatively, the one or more images may constitute a number of images captured by at least two different cameras. Thus, the number of images may depict the scene from different points of view.

The method 100 further comprises obtaining S104, for a machine learning model configured to perform a task of the automated driving system, an internal representation of the sensor data. The internal representation should be construes as a representation of the sensor data reflecting how the machine learning model (sometimes referred to as "the model") represents it internally. The internal representation may in other words be understood as a representation in a so-called latent space of the machine learning model. A latent space within the field of machine learning typically refers to a lower-dimensional space where complex and highdimensional data (i.e. the input data) is transformed and encoded into a state of generally different dimensionality. This state is a state that is suitable for the machine learning model to make predictions on. In the present context, the input data is the sensor data. The sensor data can thus be transformed into a state suitable for the machine learning model (such as a perception model) to make predictions on. In some embodiments, the latent space may be of the same, or of a higher dimensionality, than the input data. This representation is learned by the machine learning model during training and captures essential features or patterns in the input data. The term "latent" implies that these features or patterns are not directly observed or explicitly provided but are instead inferred by the model. The internal representation (or "latent space representation" or "embedding") may thus be a representation of the sensor data that the machine learning model uses to perform its task. In some embodiments, the internal representation is a vector representation in one or more dimensions. The internal representation can be formed by inputting or feeding the sensor data to the machine learning model and extracting the internal representation from said machine learning model. For example, the internal representation may be extracted from an internal state or layer of the machine learning model. The internal state of the model may be a state before the final prediction or output state. It is to be appreciated that the internal representation may be extracted from different layers or depths inside the model. Thus, it may be possible to extract multiple internal representations of the same model. Which (one or more) internal representation(s) that is extracted from the model, and for the sensor data, may vary depending on a specific realization. In one example, the machine learning model may be an end-to-end model configured to perform a perception task and a downstream task. In such case, the internal representation may be extracted from an intermediate layer or state of the model, e.g. corresponding to a part of the model performing the perception task.

The internal representation may be received from the vehicle. Thus, the internal representation may be determined by the machine learning model locally in the vehicle. Alternatively, the internal representation may be obtained S104 by being determined in the server performing the method 100. More specifically, the server may have access to a copy of the machine learning model provided in the vehicle (herein referred to as global or master model). By determining the internal representation in the server, less data needs to be transmitted, and computational resources in the vehicle can be saved.

The scene to which the obtained sensor data pertains may be a scene of interest. The scene may be determined as a scene of interest by the vehicle. In such case, the sensor data pertaining to the scene may be obtained S102 in response to the vehicle having determined the scene as a scene of interest.

Alternatively, the scene may be determined as a scene of interest by the server, based on the obtained sensor data. Obtaining S104 the internal representation may be performed in response to identifying the scene as a scene of interest. For example, the server may receive the sensor data from the vehicle, process the sensor data to determine whether the scene is a scene of interest, and then determine the internal representation of the sensor data in response to the scene being determined as a scene of interest.

The scene of interest may correspond to a scene being of interest for the development of the machine learning model, i.e. a scenario which may be of relevance for further investigation. In general, this may be determined either based on the sensor data, or based on the output of the machine learning model. As one example, the scene of interest may be a scene of which the machine learning model outputs an incorrect prediction. Put differently, the scene of interest may be a scene of which the machine learning model makes an error. In another example, the scene of interest may be a scene which to some extent is challenging for the machine learning model, i.e. a scene in which the model output is of low confidence. For example, the scene of interest may depict a scene of low contrast or lighting conditions, or depicting rare or previously unseen objects, or objects in front of complex or cluttered backgrounds. In conclusion, determining the scene as a scene of interest may be understood as identifying a potential failure mode of the machine learning model. Thus, the method 100 may comprise detecting an error (or potentially challenging scene) of the machine learning model, and obtaining the internal representation of the sensor data in response to this. By doing this, the amount of data that needs to be collected, transmitted and processed can be reduced. It may further save time and computational resources, as opposed to analyzing all collected data.

The scene may be determined (or identified) as a scene of interest in response to a trigger event. The trigger event may be an intervention by the ADS (e.g. an activation of an automated emergency braking system) or by a driver overriding the ADS. More specifically, the trigger event may be having detected a deviating behavior of the vehicle. Thus, the scene may be identified as a scene of interest based on a detected deviating behavior of the vehicle at the scene. In other words, the scene may be identified as a scene of interest in response to detecting a deviating behavior of the vehicle in connection with the scene to which the sensor data pertains.

The deviating behavior may be one of an activation of an emergency braking system, an evasive maneuver performed by a driver, an evasive maneuver performed by the automated driving system, a driving incident, or a notification from an occupant of the vehicle.

The wording "evasive maneuver", as used in the context of the present disclosure, refers to a movement action undertaken by the vehicle for the purpose of avoiding an collision, a potential obstacle, obstruction, hazardous situation, or the like. In this context, the evasive maneuver being performed can be used as an indication that something unexpected occurred which the machine learning model failed to predict correctly. As an example, an evasive maneuver may be performed by the driver to override the automated driving system in response to the machine learning model failing to detect an obstacle, or falsely detects an obstacle which isn't actually present. As another example, the evasive maneuver may be performed by the automated driving system in response to suddenly detecting an obstacle, which it should have detected at an earlier stage. The same holds also for an activation of the emergency breaking system.

The evasive maneuver may be an abrupt deviation from a current travelling direction. The evasive maneuver can involve a dynamic adjustment of the vehicle's speed (i.e. by increasing the speed or braking) and/or its trajectory. In some embodiments, the evasive maneuver is an evasive steering maneuver. Put differently, the evasive maneuver may be achieved by adjusting a trajectory of the vehicle.

The evasive maneuver may be a maneuver deviating from a current lane of the vehicle. This may e.g. be detected by a (machine learning based) lane detection model. The evasive maneuver may be a maneuver deviating from an expected trajectory of the vehicle. In other words, the evasive maneuver may be detected as a deviation of the vehicle from the expected trajectory of the vehicle. The expected trajectory herein refers to a predicted or planned path or motion that the vehicle is anticipated to follow in a given environment or driving scenario. The expected trajectory may be determined based on a machine-learning based trajectory prediction of the vehicle. The expected trajectory can be formed based on various factors of the vehicle, including, but not limited to, sensor data, map or location data, vehicle dynamics, a planned route, behavior prediction, and real-time decision-making algorithms. The sensor data may provide information about the vehicles surroundings, i.e. how the vehicle perceives its surrounding environment. The sensor data may give information about the position of other vehicles, pedestrians, obstacles, road conditions, and more. It may further give information about the direction of the lane or road in which the vehicle is travelling. Map or location data may provide additional information about how the vehicle can be expected to navigate. Vehicle dynamics may provide information about how the vehicle is driving, in terms of velocity, acceleration, etc. The planned route may be based on a destination of the vehicle, and provide information about what route, and/or lane the vehicle is expected to drive along. Behavior prediction may e.g. be based on a driving scenario, such as driving along a highway. In such a case, the vehicle can be expected to travel at a certain speed and along a certain lane so that any deviations from that can be indicative of an evasive maneuver. Behavior prediction may also be related to driving characteristics of the driver. Real-time decision-making refers to how the vehicle (either the driver or the autonomous driving system) reacts to sudden changes in the driving scenario, which may cause a change in the expected trajectory of the vehicle, such as a planned lane change.

The notification from the occupant of the vehicle may be received in response to the occupant experiencing discomfort or dissatisfaction with a performance of the automated driving system.

In some embodiments, the scene may be determined as a scene of interest by processing the sensor data. As an example, the sensor data may be determined as pertaining to a scene being out of distribution of the machine learning model, or depicting a rare or previously unseen object. This can e.g. be done by inputting the sensor data into a further machine learning model being trained to identify such cases. Thereby, challenging or tricky cases for the machine learning model can be detected and analyzed in an efficient way.

In some embodiments, the sensor data may be obtained S102 as randomly sampled sensor data, or as sensor data sampled at a defined interval. This may facilitate a continuous monitoring of the performance of the machine learning model. If a discrepancy is identified in the subsequent comparison between the original and synthetic sensor data for the randomly (or at a defined interval) sampled sensor data, this may be used as a signal that the machine learning model should be evaluated further.

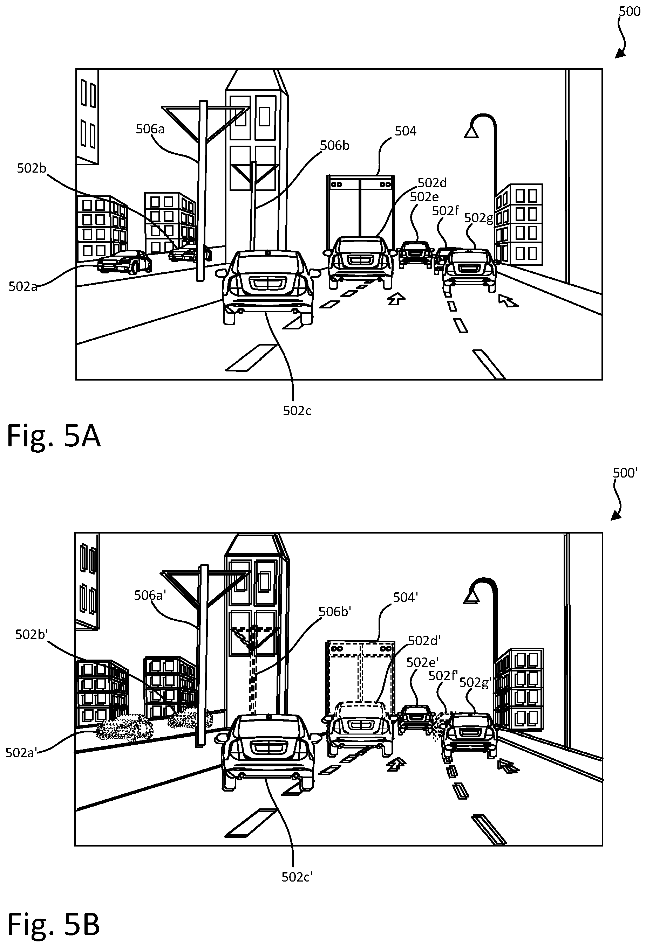

The method 100 further comprises generating S106 synthetic sensor data for subsequent comparison with the obtained sensor data. The synthetic sensor data being generated by inputting the internal representation into a generative model trained to generate synthetic sensor data based on internal representations. The generated synthetic sensor data can thus be used in the subsequent comparison against the original sensor data. As will be further explained below, in connection with Fig. 5A to 5D, the synthetic sensor data and the obtained sensor data can be compared to identify any potential discrepancies between them. This enables gaining insight into the inner workings of the model.

The synthetic sensor data may be seen as a visual representation of the internal representation of the sensor data. In other words, the synthetic sensor data can be seen as a reconstruction of the original sensor data, based on the internal representation of the machine learning model. The synthetic sensor data therefore provides a visualization of how the machine learning model perceives the scene depicted in the sensor data. By the wording "synthetic" as in "synthetic sensor data", it is herein meant that the sensor data is artificially or machine generated by the generative model, as opposed to being collected by real-world sensors.

As mentioned above, the generative model may e.g. be a generative adversarial network, or a diffusion model. However, the generative model may be any kind of generative model trained to generate synthetic sensor data based on internal representation. More specifically, the generative model may be trained based on a training dataset comprising a plurality of internal representations of a machine learning model as input, and corresponding sensor data as ground truth. In other words, the generative model may be trained to reconstruct sensor data from data in the form of an internal representation of the machine learning model. The internal representations used in the training of the generative model may be obtained in the same way as the internal representation obtained for the obtained sensor data, as described above. The generative model may be trained on internal representation for the specific machine learning model it is indented to be used together with. However, the generative model may alternatively be trained using internal representations of another machine learning model. More specifically, the process of training the generative model may be described as follows.

First the machine learning model trained to perform a task of the ADS may be provided. The machine learning model may either be pre-trained, or trained on a training dataset for the intended task of the machine leaning model. The trained machine learning model may then be frozen, such that it does not continue to learn from new data. Thereby, the model doesn't change during the rest of the process. In a next step, instances of sensor data for training (e.g. a set of images) can be embedded into the latent space of the machine learning model. Put differently, internal representations for the model, corresponding to the instances of sensor data can be determined. This may be done by feeding the sensor data into the machine learning model, and extracting the internal representations from a state of the machine learning model before it generates the final result (e.g. a prediction). Thereby, a training set of pairs of instances of sensor data (e.g. an image) and a corresponding internal representation can be obtained. In a next step, the generative model can be trained using said training set, to reconstruct the sensor data based on the internal representation. Thus, the generative model learns to generate sensor data that look similar to the sensor data of the training set with the internal representation as input. The instances of sensor data used for forming the training set for training of the generative model may comprise sensor data used in the training of the machine learning model. Alternatively, or in combination, said training set may comprise sensor data which the machine learning model has not seen during its training.

The method 100 may further comprise identifying S108 one or more discrepancies between the obtained sensor data and the generated synthetic sensor data based on a comparison thereof. By the wording "discrepancies" it is herein meant any differences between the obtained sensor data (i.e. the original sensor data) and the synthetic sensor data. A discrepancy may e.g. be a missing, blurry, unclear or misrepresented object. The misrepresented object may be an object only partly visible, or depicted in a different way. Moreover, the misrepresented object may be two or more objects incorrectly being depicted as one object. In other words, the discrepancy may be a number of objects not being distinguishable from each other. The discrepancies may provide an indication of a reason as to why the machine learning model may have failed. It should be noted that in general, there will always be some information loss between the original sensor data and the synthetic sensor data, e.g. because the internal representation typically is of lower dimensionality than the sensor data, and due to differences between the machine learning model and the generative model. Such information loss may e.g. show itself as a general blurriness over the entire synthetic sensor data. The discrepancies as used herein, refers to more significant differences between the original sensor data and the synthetic sensor data, than this general information loss. However, what is a discrepancy may be determined in the subsequent comparison between the original sensor data and the synthetic sensor data. Discrepancies between the original sensor data and the synthetic sensor data will be further described in connection with Fig. 5A to 5D below.

In some embodiments, the method 100 comprises outputting the synthetic data and the original sensor data to a display. The method 100 may further comprise prompting a user to make a comparison between the synthetic sensor data and the original sensor data. The method 100 may further comprise receiving an indication of an identified discrepancy between the original sensor data and the synthetic sensor data.

The comparison between the original sensor data and the synthetic sensor data enabled by the presently disclosed technology, and performed in any way described herein, can provide information on how to improve the machine learning model. Based on such comparison, it may e.g. be concluded that the model has to become better at poor lighting conditions, better at detecting debris, or to distinguish between vehicles in a traffic jam. Based on this information, a targeted training data collection approach can be employed to facilitate improvements of the model in any identified scenarios.

In some embodiments, the method 100 may be used to identify errors or potential mistakes made by the machine learning model, based on the subsequent comparison between the sensor data and the synthetic sensor data. Thus, instead of performing the steps of the method in response to detecting a potential error, the method 100 itself may be used to detect the potential errors. For example, if one or more discrepancies are identified, it may be concluded that the machine learning model may have missed an object in the scene. This information may e.g. be used to determine that the scene depicted in the sensor data in some way is out-of-distribution of what the machine learning model is trained on.

The method 100 may further comprise, in response to receiving an indication of a discrepancy between the obtained sensor data and the synthetic sensor data, assigning S110 annotation data to the sensor data and storing S112 the sensor data with assigned annotation data for subsequent training of the machine learning model. The indication of the discrepancy may be received from a user input, or by being determined by the server.

The method 100 may further comprise, in response to receiving an indication of a discrepancy between the obtained sensor data and the synthetic sensor data, obtaining S114 additional sensor data pertaining to the scene of the physical environment, and storing S116 the additional sensor data for subsequent training of the machine learning model. The additional sensor data may be sensor data pertaining to the scene of a different type, than the previously obtained sensor data. Alternatively, or in combination, the additional sensor data may be sensor data pertaining to the scene from a different point of view than the previously obtained sensor data. The additional sensor data may be captured by the vehicle. Alternatively, the additional sensor data may be captured by a further vehicle. The server may transmit a request for the additional sensor data to the further vehicle which may be about to pass the location of the scene. By collecting additional sensor data of the scene, the machine learning model can be improved even further in handling scenarios like the present scene.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

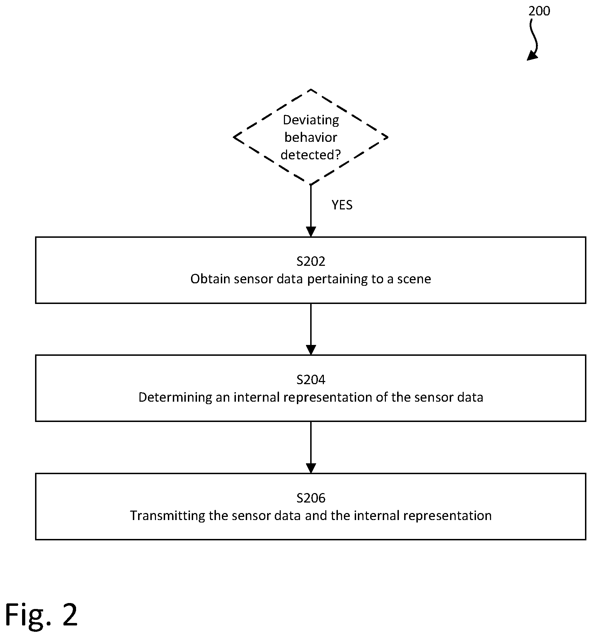

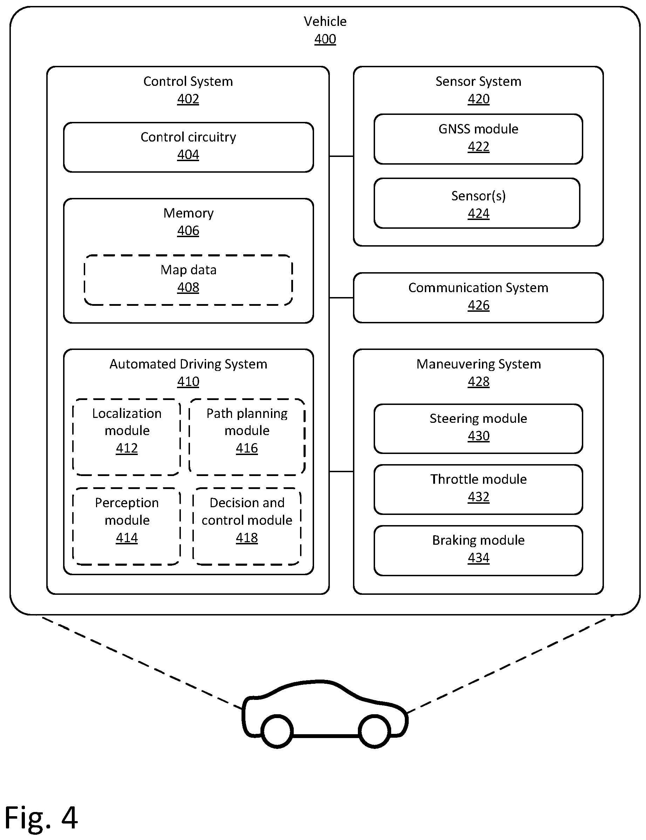

Figure 2 is a schematic flowchart representation of a computer-implemented method 200 according to some embodiments. The method 200 can be performed in a vehicle equipped with an automated driving system, such as the vehicle 400 described below in connection with Fig. 4. In other words, the method 200 may be performed by control circuitry of the automated driving system. The method 200 provides for data for subsequent generation of synthetic data, and later on comparison with original sensor data.

Below, the different steps of the method 200 are described in more detail. Even though illustrated in a specific order, the steps of the method 200 may be performed in any suitable order as well as multiple times. Thus, although Fig. 2 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 200 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

The method 200 comprises, in response to detecting a deviating behavior of the vehicle, obtaining S202 sensor data pertaining to a scene of a surrounding environment at which the deviating behavior was detected. The sensor data may be obtained by on-board sensors of the vehicle. For further details relating to the deviating behavior of the vehicle, and how it may be determined, reference is made to the above. It is to be noted that the sensor data may be continuously recorded (or collected) as the vehicle is travelling. The deviating behavior may e.g. be detected based on the sensor data pertaining to the scene of the surrounding environment, or based on other types of sensor data of the vehicle. Obtaining S202 the sensor data in response to detecting the deviating behavior may thus be understood as storing or otherwise selecting the specific sensor data corresponding to the deviating behavior from the continuously recorded sensor data.

The method 200 further comprises determining S204, for a machine learning model configured to perform a task of the automated driving system, an internal representation of the sensor data. The internal representation is determined S204 by inputting the sensor data to the machine learning model and extracting the internal representation from said machine learning model.

The method 200 further comprises transmitting S206 the sensor data and the internal representation of the sensor data to a server for subsequent generation of synthetic sensor data based on the internal representation. The server may e.g. be the server 300 as described below in connection with Fig. 3.

In some embodiments, the method 200 further comprises generating synthetic sensor data for subsequent comparison with the obtained sensor data. The synthetic sensor data may be generated in a similar way as described above, in connection with Fig. 1. In other words, the generative model may be provided in the vehicle, for allowing the synthetic sensor data to be generated locally in the vehicle. The method 200 may then further comprise transmitting the synthetic sensor data to the server for subsequent comparison. This may e.g. be performed in connection with transmitting S206 the sensor data and the internal representation of the sensor data to the server. In some embodiments, the step denoted S206 may involve transmitting the sensor data and the synthetic sensor data to the server for subsequent comparison. Thus, the internal representation need not to be transmitted to the server in such case.

Executable instructions for performing these functions are, optionally, included in a non-transitory computer-readable storage medium or other computer program product configured for execution by one or more processors.

Figure 3 is a schematic illustration of a server 300 in accordance with some embodiments. The server 300 may be configured to perform the method 100 as described in connection with Fig. 1.

The server 300 (may also be referred to as remote server, cloud server, central server, back-office server, fleet server, or back-end server) as described herein for the purpose of this patent application, refers to a computer system or networked device configured to provide various computing services, data storage, processing capabilities, or resources to clients or users over a communication network. In the present case, the wording "clients" refers to connected vehicles (such as the vehicle 400 described below) of a fleet of vehicles. Thus, the server 300 as described herein may refer to a general computing device provided outside of the vehicle. Even though the server 300 is herein illustrated as one device, the server 300 may be a distributed computing system, formed by a number of different computational devices.

The server 300 comprises control circuitry 302. The control circuitry 302 may physically comprise one single circuitry device. Alternatively, the control circuitry 302 may be distributed over several circuitry devices.

As shown in the example of Fig. 3, the server 300 may further comprise a transceiver 306 and a memory 308. The control circuitry 302 being communicatively connected to the transceiver 306 and the memory 308. The control circuitry 302 may comprise a data bus, and the control circuitry 302 may communicate with the transceiver 306 and/or the memory 308 via the data bus.

The control circuitry 302 may be configured to carry out overall control of functions and operations of the server 300. The control circuitry 302 may include a processor 304, such as a central processing unit (CPU), microcontroller, or microprocessor. The processor 304 may be configured to execute program code stored in the memory 308, in order to carry out functions and operations of the server 300. The control circuitry 302 is configured to perform the steps of the method 100 as described above in connection with Fig. 1. The steps may be implemented in one or more functions stored in the memory 308.

The transceiver 306 is configured to enable the server 300 to communicate with other entities, such as vehicles or other servers. The transceiver 306 may both transmit data from and receive data to the server 300.

The memory 308 may be a non-transitory computer-readable storage medium. The memory 308 may be one or more of a buffer, a flash memory, a hard drive, a removable media, a volatile memory, a non-volatile memory, a random access memory (RAM), or another suitable device. In a typical arrangement, the memory 308 may include a non-volatile memory for longterm data storage and a volatile memory that functions as system memory for the server 300. The memory 308 may exchange data with the circuitry 302 over the data bus. Accompanying control lines and an address bus between the memory 308 and the circuitry 302 also may be present.

Functions and operations of the server 300 may be implemented in the form of executable logic routines (e.g., lines of code, software programs, etc.) that are stored on a non-transitory computer readable recording medium (e.g., the memory 308) of the server 300 and are executed by the circuitry 302 (e.g., using the processor 304). Put differently, when it is stated that the circuitry 302 is configured to execute a specific function, the processor 304 of the circuitry 302 may be configured execute program code portions stored on the memory 308, wherein the stored program code portions correspond to the specific function. Furthermore, the functions and operations of the circuitry 302 may be a stand-alone software application or form a part of a software application that carries out additional tasks related to the circuitry 302. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the server 300 is described.

The control circuitry 302 is configured to obtain sensor data pertaining to a scene of a surrounding environment of a vehicle equipped with an automated driving system. This may be performed e.g. by execution of a first obtaining function.

The control circuitry 302 is further configured to obtain, for a machine learning model configured to perform a task of the automated driving system, an internal representation of the sensor data. As explained in the foregoing, the internal representation can be formed by inputting the sensor data to the machine learning model and extracting the internal representation from said machine learning model.

The control circuitry 302 is further configured to generate synthetic sensor data for subsequent comparison with the obtained sensor data, wherein the synthetic sensor data is generated by inputting the internal representation into a generative model trained to generate synthetic sensor data based on internal representations.

The control circuitry 302 may be further configured to identify one or more discrepancies between the obtained sensor data and the generated synthetic sensor data based on a comparison thereof.

The control circuitry 302 may be further configured to, in response to receiving an indication of a discrepancy between the obtained sensor data and the synthetic sensor data: assign annotation data to the sensor data, and store the sensor data with assigned annotation data for subsequent training of the machine learning model.

The control circuitry 302 may be further configured to, in response to receiving an indication of a discrepancy between the obtained sensor data and the synthetic sensor data: obtain additional sensor data pertaining to the scene of the physical environment, and store the additional sensor data for subsequent training of the machine learning model. As explained above, the indication of the discrepancy may be determined by a user, or automatically, by a machine.

It should be noted that the principles, features, aspects, and advantages of the method 100 as described above in connection with Fig. 1, are applicable also to the server 300 as described herein. In order to avoid undue repetition, reference is made to the above.

Figure 4 is a schematic illustration of a vehicle 400 in accordance with some embodiments. The vehicle 400 is equipped with an Automated Driving System (ADS) 410. As used herein, a "vehicle" is any form of motorized transport. For example, the vehicle 400 may be any road vehicle such as a car (as illustrated herein), a motorcycle, a (cargo) truck, a bus, a smart bicycle, etc.

The vehicle 400 comprises a number of elements which can be commonly found in autonomous or semi-autonomous vehicles. It will be understood that the vehicle 400 can have any combination of the various elements shown in Fig. 4. Moreover, the vehicle 400 may comprise further elements than those shown in Fig. 4. While the various elements is herein shown as located inside the vehicle 400, one or more of the elements can be located externally to the vehicle 400. Further, even though the various elements are herein depicted in a certain arrangement, the various elements may also be implemented in different arrangements, as readily understood by the skilled person. It should be further noted that the various elements may be communicatively connected to each other in any suitable way. The vehicle 400 of Fig. 4 should be seen merely as an illustrative example, as the elements of the vehicle 400 can be realized in several different ways.

The vehicle 400 comprises a control system 402. The control system 402 is configured to carry out overall control of functions and operations of the vehicle 400. The control system 402 comprises control circuitry 404 and a memory 406. The control circuitry 402 may physically comprise one single circuitry device. Alternatively, the control circuitry 402 may be distributed over several circuitry devices. As an example, the control system 402 may share its control circuitry 404 with other parts of the vehicle. The control circuitry 402 may comprise one or more processors, such as a central processing unit (CPU), microcontroller, or microprocessor. The one or more processors may be configured to execute program code stored in the memory 406, in order to carry out functions and operations of the vehicle 400. The processor(s) may be or include any number of hardware components for conducting data or signal processing or for executing computer code stored in the memory 406. In some embodiments, the control circuitry 404, or some functions thereof, may be implemented on one or more so-called system-on-a-chips (SoC). As an example, the ADS 410 may be implemented on a SoC. The memory 406 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 406 may include database components, object code components, script components, or any other type of information structure for supporting the various activities of the present description.

In the illustrated example, the memory 406 further stores map data 408. The map data 408 may for instance be used by the ADS 410 of the vehicle 400 in order to perform autonomous functions of the vehicle 400. The map data 408 may comprise high-definition (HD) map data. It is contemplated that the memory 408, even though illustrated as a separate element from the ADS 410, may be provided as an integral element of the ADS 410. In other words, according to some embodiments, any distributed or local memory device may be utilized in the realization of the present inventive concept. Similarly, the control circuitry 404 may be distributed e.g. such that one or more processors of the control circuitry 404 is provided as integral elements of the ADS 410 or any other system of the vehicle 400. In other words, according to an exemplary embodiment, any distributed or local control circuitry device may be utilized in the realization of the present inventive concept.

The vehicle 400 further comprises a sensor system 420. The sensor system 420 is configured to acquire sensory data about the vehicle itself, or of its surroundings. The sensor system 420 may for example comprise a Global Navigation Satellite System (GNSS) module 422 (such as a GPS) configured to collect geographical position data of the vehicle 400. The sensor system 420 may further comprise one or more sensors 424. The one or more sensor(s) 424 may be any type of on-board sensors, such as cameras, LIDARs and RADARs, ultrasonic sensors, gyroscopes, accelerometers, odometers etc. It should be appreciated that the sensor system 420 may also provide the possibility to acquire sensory data directly or via dedicated sensor control circuitry in the vehicle 400.

The vehicle 400 further comprises a communication system 426. The communication system 426 is configured to communicate with external units, such as other vehicles (i.e. via vehicle-to-vehicle (V2V) communication protocols), remote servers (e.g. cloud servers, as explained above in connection with Fig. 3), databases or other external devices, i.e. vehicle-to-infrastructure (V2I) or vehicle-to-everything (V2X) communication protocols. The communication system 426 may communicate using one or more communication technologies. The communication system 426 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 400 or with local infrastructure elements. ETSI is working on cellular standards for vehicle communication and for instance 5G is considered as a suitable solution due to the low latency and efficient handling of high bandwidths and communication channels.

The communication system 426 may further provide the possibility to send output to a remote location (e.g. remote server, operator or control center) by means of the one or more antennas. Moreover, the communication system 426 may be further configured to allow the various elements of the vehicle 400 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 400 further comprises a maneuvering system 420. The maneuvering system 428 is configured to control the maneuvering of the vehicle 400. The maneuvering system 428 comprises a steering module 430 configured to control the heading of the vehicle 400. The maneuvering system 428 further comprises a throttle module 432 configured to control actuation of the throttle of the vehicle 400. The maneuvering system 428 further comprises a braking module 434 configured to control actuation of the brakes of the vehicle 400. The various modules of the steering system 428 may receive manual input from a driver of the vehicle 400 (i.e. from a steering wheel, a gas pedal and a brake pedal respectively). However, the maneuvering system 428 may be communicatively connected to the ADS 410 of the vehicle, to receive instructions on how the various modules should act. Thus, the ADS 410 can control the maneuvering of the vehicle 400.

As stated above, the vehicle 400 comprises an ADS 410. The ADS 410 may be part of the control system 402 of the vehicle. The ADS 410 is configured to carry out the functions and operations of the autonomous functions of the vehicle 400. The ADS 410 can comprise a number of modules, where each module is tasked with different functions of the ADS 410.

The ADS 410 may comprise a localization module 412 or localization block/system. The localization module 412 is configured to determine and/or monitor a geographical position and heading of the vehicle 400, and may utilize data from the sensor system 420, such as data from the GNSS module 422. Alternatively, or in combination, the localization module 412 may utilize data from the one or more sensors 424. The localization system may alternatively be realized as a Real Time Kinematics (RTK) GPS in order to improve accuracy.

The ADS 410 may further comprise a perception module 414 or perception block/system. The perception module 414 may refer to any commonly known module and/or functionality, e.g. comprised in one or more electronic control modules and/or nodes of the vehicle 400, adapted and/or configured to interpret sensory data - relevant for driving of the vehicle 400 - to identify e.g. obstacles, vehicle lanes, relevant signage, appropriate navigation paths etc. The perception module 414 may thus be adapted to rely on and obtain inputs from multiple data sources, such as automotive imaging, image processing, computer vision, and/or in-car networking, etc., in combination with sensory data e.g. from the sensor system 420.

A machine learning model, such as an object detection model for detecting and/or classifying object in the surrounding environment of the vehicle 400 may be part of the ADS 410, or more specifically part of the perception module 414.

The vehicle 400 is configured to perform the functions of the method 200 as described above in connection with Fig 2. These functions may be implemented in a separate computing device provided in the vehicle. The computing device may comprise control circuitry configured to perform the steps of the method 200. Alternatively, the functions may be distributed over one or more modules, systems, or elements of the vehicle 400, as readily understood by the person skilled in the art. For example, the control circuitry 404 of the control system 402 may be configured to perform the steps of the method 200. More specifically, control circuitry 404 of the vehicle 400 is configured to obtain sensor data pertaining to a scene of a surrounding environment at which the deviating behavior was detected, in response to detecting a deviating behavior of the vehicle. The sensor data may be collected by the one or more sensors 424 of the vehicle 400. The control circuitry 404 is further configured to determine, for a machine learning model configured to perform a task of the ADS, an internal representation of the sensor data by inputting the sensor data to the machine learning model and extracting the internal representation from said machine learning model. The machine learning model may e.g. be the machine learning model of the perception module 414 described above. However, the machine learning model may be a model of a different module of the ADS as well. The control circuitry 404 is further configured to transmit the sensor data and the internal representation of the sensor data to a server for subsequent generation of synthetic sensor data based on the internal representation. Moreover, the control circuitry 404 may be further configured to generate synthetic sensor data by inputting the internal representation into a generative model, as described in the foregoing. The server may be a server 300 as described above in connection with Fig. 3.

The localization module 412 and/or the perception module 414 may be communicatively connected to the sensor system 420 in order to receive sensor data from the sensor system 420. The localization module 412 and/or the perception module 414 may further transmit control instructions to the sensor system 420.

The ADS may further comprise a path planning module 416. The path planning module 416 is configured to determine a planned path of the vehicle 400 based on a perception and location of the vehicle as determined by the perception module 414 and the localization module 412 respectively. A planned path determined by the path planning module 416 may be sent to the maneuvering system 428 for execution.

The ADS may further comprise a decision and control module 418. The decision and control module 418 is configured to perform the control and make decisions of the ADS 410. For example, the decision and control module 418 may decide on whether the planned path determined by the path-planning module 416 should be executed or not. The decision and control module 418 may be further configured to detect any deviating behavior of the vehicle, such as deviations from the planned path, or expected trajectory of the path planning module 416. This includes both evasive maneuvers performed by the ADS 410 and by a driver of the vehicle.

It should be understood that parts of the described solution may be implemented either in the vehicle 400, in a system located external to the vehicle, or in a combination of internal and external to the vehicle; for instance in a server in communication with the vehicle, a so called cloud solution. The different features and steps of the embodiments may be combined in other combinations than those described. Further, the elements of the vehicle 400 (i.e. the systems and modules) may be implemented in different combinations than those described herein. Moreover, it should be noted that the principles, features, aspects, and advantages of the method 200 as described above in connection with Fig. 2, are applicable also to the vehicle 400 as described herein. In order to avoid undue repetition, reference is made to the above.

Figure 5A and 5B illustrates, by way of example, original sensor data 500 and synthetic sensor data 500' respectively. The purpose of Fig. 5A and 5B is to illustrate the principles of the presently disclosed technology. In the present example, the original sensor data 500 and the synthetic sensor data 500' are both image data depicting a scene of a surrounding environment of a vehicle. The original sensor data 500 herein represents an image captured by a camera of the vehicle. The image depicts a number of objects in the scene which typically are present in a surrounding environment of a vehicle driving along a road. In particular, the original sensor data 500 depicts a number of road users (herein a number of cars 502a-g and a truck 504). The original sensor data 500 further depicts some road infrastructure, such as a first and second post 506a, 506b, as well as a number of surrounding buildings. As seen in Fig. 5A, the objects depicted in the original sensor data 500 are clearly distinguishable from each other.

Turning now to the synthetic sensor data depicted in Fig. 5B. As explained in the foregoing, the synthetic sensor data is generated by a generative (machine learning) model trained to generate synthetic sensor data based on internal representations of the original sensor data. The synthetic senor data 500' can therefore be seen as a machine generated reconstruction of the original sensor data 500, in the way as the machine learning model sees it. Thus, the synthetic sensor data is a visualization of what data the machine learning model uses to perform its task. If, for instance, the machine learning model is an object detection model configured to perform an object detection task, the synthetic sensor data represents a visualization of what data the object detection model uses to make object detections.

As seen in Fig. 5B, the depicted objects are slightly less distinguishable than in the original data. This may be due to the internal representation being a lower dimensional representation of the data, and thus will not reflect it perfectly. Moreover, the generative model may introduce some minor inaccuracies in the reconstruction of the sensor data. However, some objects (e.g. the vehicles denoted 502c', 502e' and 502g', and the post denoted 506') are still distinguishable in the synthetic image. Thus, when comparing the original sensor data 500 and the synthetic sensor data 500', this may be used as an indication of the machine learning model being able to perceive these objects. However, as indicated by broken lines in Fig. 5B, some objects may no longer be distinguishable/visible. For example, these objects may fuse with the background or with other neighboring objects. These objects are thus examples of discrepancies between the original sensor data 500 and the synthetic sensor data 500'. In the present example, the vehicles denoted by 502a', 502b' and 502f, as well as the post denoted 506b' are no longer visible in the synthetic sensor data. Since they are missing in the synthetic data, it can be concluded that e.g. an object detection model would likely have fail to detect these objects. Moreover, the vehicles denoted 504' and 502d', as illustrated herein, are an example of how two objects may melt together into one. In other words, the machine learning model performing a task based on the sensor data may incorrectly treat these vehicles as one.

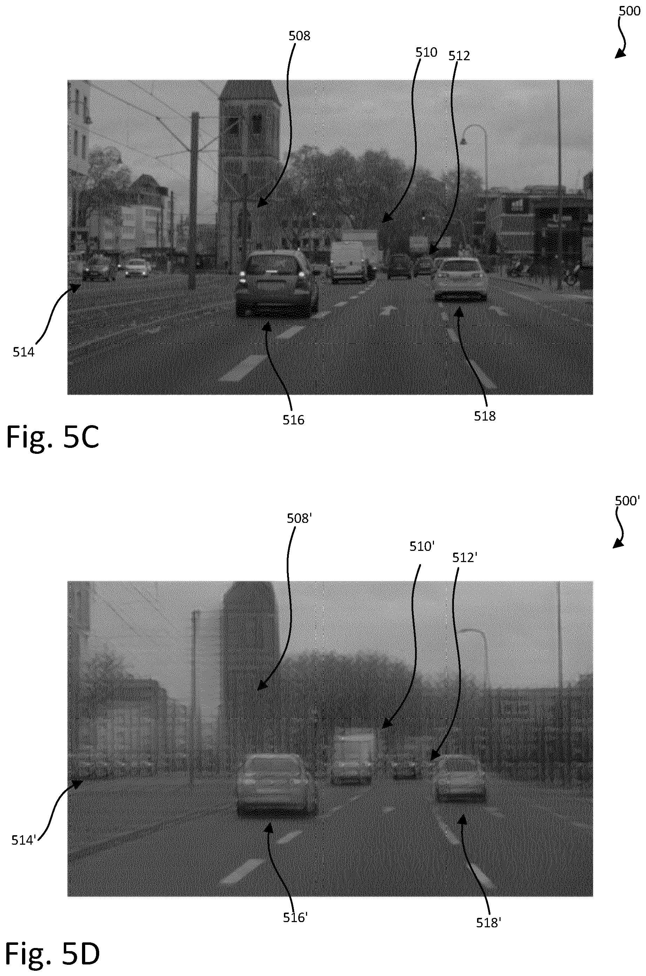

Figure 5C and 5D illustrates, by way of another example, original sensor data 500 and synthetic sensor data 500' respectively. In this case, the original sensor data 500 is a real-world image, and the synthetic sensor data 500' a reconstruction of said real-world image, based on an internal representation thereof. For improved understanding, some details are highlighted in the image, to illustrate what kind of discrepancies that can be identified when comparing the two images.

As a first example, the post at the area denoted 508 in the original sensor data, is no longer visible in the corresponding area (denoted 508') in the synthetic sensor data. In a second example, the area denoted 510 in the original sensor data clearly shows a van behind a larger truck. However, in the synthetic sensor data, the corresponding area (denoted 510') appears to depict just one larger vehicle. This is thus an example of two vehicles incorrectly being perceived as one. In a third example, the cars in the areas denoted 512 and 514 are no longer visible in the corresponding areas 512' and 514 in the synthetic sensor data. Lastly, the areas denoted 516 and 518 shows examples of vehicles which are still visible in the synthetic data, as seen in the areas denoted 516' and 518'. These vehicles can therefore be expected to be correctly perceived by the machine learning model in performing its task.

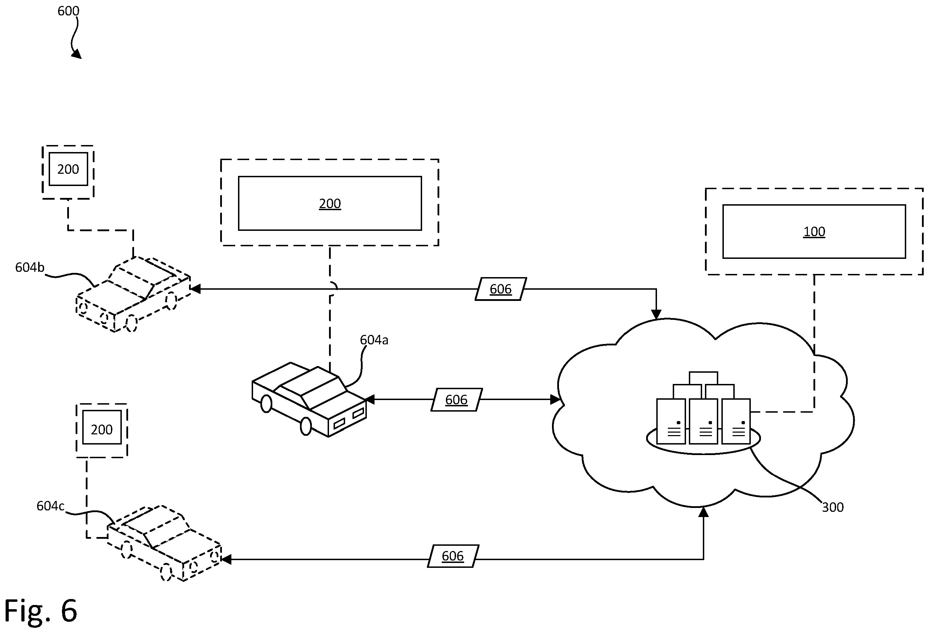

Figure 6 illustrates, by way of example, a distributed system 600 according to some embodiments. The system 600 should be seen as a non-limiting example of a realization of the herein disclosed aspects of the present inventive concept. For instance, the system 600 is configured to perform the method 100 as described above in connection with Fig. 1. The system 600 may be further configured to perform the method 200 as described above in connection with Fig. 2. Thus, any features or principles described above are applicable also to the system 600 as described herein and vice versa, unless otherwise stated.

The system 600 comprises a server 602 (or remote, cloud, central, back-office, fleet, or back-end server), referred to in the following as the remote server 602 or just server 602. The server 602 may be the server 300 as described above in connection with Fig. 3. Thus, the server 602 may be configured to perform the method 100 as described in connection with Fig. 1 above. As illustrated, the server 602 may be provided in the cloud, i.e. as a cloud-implemented server.

The system 600 further comprises one or more vehicles 604a-c, also referred to as a fleet of vehicles. The one or more vehicles 604a-c may be vehicles 400 as described above in connection with Fig. 4. Thus, the one or more vehicles 604a-c may be configured to perform the method 200 as described in connection with Fig. 2.

The one or more vehicles 604a-c are communicatively connected to the remote server 602 for transmitting and/or receiving data 606 between the vehicles and the server. The one or more vehicles 604a-c may be further communicatively connected to each other. The data 606 may be any kind of data, such as communication signals, or sensor data. The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area (LAN) (e.g. IEEE 802.11) based solutions. The sever 602 comprises a suitable memory and control circuitry, for example, one or more processors or processing circuitry, as well as one or more other components such as a data interface and transceiver. The server 602 may also include software modules or other components, such that the control circuity can be configured to execute machine-readable instructions loaded from memory to implement the steps of the method to be performed.

The fleet illustrated in Fig. 6 comprises three vehicles, a first, second and third vehicle 604a-c, by way of example. The system 600 may however comprise any number of vehicles 604a-c. In the following, the system 600 will be described mainly with reference to the first vehicle 604a. It is to be understood that the principles applies to any vehicle of the fleet of vehicles.

In the following, an example of how the system 600 may perform the techniques according to some embodiments will be described. For further details regarding the different steps, reference is made to Fig. 1 and 2 above to avoid undue repetition.

In response to the vehicle detecting a deviating behavior, the vehicle 604a may obtain sensor data pertaining to a scene of a surrounding environment of the vehicle 604a corresponding to the deviating behavior (i.e. corresponding to step S202). Alternatively, or in combination, the sensor data may be obtained in response to detecting an error or failure of a machine learning configured to perform a task of the ADS of the vehicle 604a. It is to be appreciated that the vehicle 604a may collect the sensor data continuously, as the vehicle drives. Then, in response to detecting the deviating behavior (or error of the machine learning model), the sensor data depicting the relevant scene may be stored for further processing.

In some embodiments, the vehicle 604a may determine an internal representation of the sensor data for the machine learning model, by inputting the sensor data to the machine learning model and extracting the internal representation from said machine learning model (i.e. corresponding to step S204). The vehicle 604a may then transmit the obtained sensor data and the determined internal representation to the server 602. Thereby the server 602 obtains the sensor data and the internal representation of the sensor data. In some alternative embodiments, the vehicle 604a transmits the obtained sensor data to the server 602. Upon obtaining the sensor data, the server 602 may determine the internal representation of the sensor data by inputting the sensor data to the machine learning model and extracting the internal representation from said machine learning model. The machine learning model may in this case be a global version of the machine learning model (also referred to as master model). The global version of the machine learning model refers to a version of the machine learning model managed by the server. The same model may be deployed in the vehicles of the fleet of vehicles as local versions of the machine learning model.

After obtaining (i.e. corresponding to step S104) the internal representation of the sensor data (either by receiving the internal representation from the vehicle 604a or determining the internal representation by the server 602), the server 602 may generate the synthetic sensor data (i.e. corresponding to step S106). The synthetic sensor data can be formed by inputting the internal representation into a generative model (provided in the server). The generative model being trained to generate synthetic sensor data based on internal representations. The generated synthetic sensor data may then be used in subsequent comparison with the obtained (original) sensor data. The original sensor data and the generated synthetic sensor data may be compared to identify any discrepancies in between them. The server may compare the original sensor data and the synthetic sensor data by automatic processing means, such as image comparison algorithms. In some embodiments, the server may prompt a user to make the comparison. For example, the original sensor data and the synthetic sensor data may be outputted to a display for user comparison. The server 602 may then receive results of the comparison, such as an indication of potential discrepancies identified by the user. The results of the comparison can be used in the continued development of the machine learning model. As an example, the sensor data may be annotated and stored for continued training of the machine learning model. Moreover, a targeted approach may be employed to collect additional training data of the same, or similar, scene(s) of which it has been concluded that the machine learning model has to improve. The server 602 may in such cases transmit requests to one or more vehicles of the fleet of vehicles to collect sensor data pertaining to certain scenes.

The above-described process of the system 600 is to be understood as a non-limiting example of the presently disclosed technology for improved understanding. Further variants are apparent from the present disclosure and readily realized by the person skilled in the art.

The present invention has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100), performed in a server, for providing insight into a machine learning model, the method (100) comprising:
obtaining (S102) sensor data pertaining to a scene of a surrounding environment of a vehicle equipped with an automated driving system;
obtaining (S104), for a machine learning model configured to perform a task of the automated driving system, an internal representation of the sensor data, wherein the internal representation is formed by inputting the sensor data to the machine learning model and extracting the internal representation from said machine learning model, wherein the internal representation of the sensor data is obtained (S104) in response to identifying the scene as a scene of interest; and
generating (S106) synthetic sensor data for subsequent comparison with the obtained sensor data, wherein the synthetic sensor data is generated by inputting the internal representation into a generative model trained to generate synthetic sensor data based on internal representations.

2. The method (100) according to claim 1, wherein the scene, to which the obtained sensor data pertains, is a scene of interest.

3. The method (100) according to claim 1 or 2, wherein the scene is identified as the scene of interest based on a detected deviating behavior of the vehicle at the scene.

4. The method (100) according to claim 3, wherein the deviating behavior is one of an activation of an emergency braking system, an evasive maneuver performed by a driver, an evasive maneuver performed by the automated driving system, a driving incident, or a notification from an occupant of the vehicle.

5. The method (100) according to any one of the claims 1 to 4, further comprising identifying (S108) one or more discrepancies between the obtained sensor data and the generated synthetic sensor data based on a comparison thereof.

6. The method (100) according to any one of the claims 1 to 5, wherein the sensor data comprises one or more of image data, LIDAR data, radar data or ultrasonic data.

7. The method (100) according to any one of the claims 1 to 6, further comprising, in response to receiving an indication of a discrepancy between the obtained sensor data and the synthetic sensor data:
assigning (S110) annotation data to the sensor data; and
storing (S112) the sensor data with assigned annotation data for subsequent training of the machine learning model.

8. The method (100) according to any one of the claims 1 to 7, further comprising, in response to receiving an indication of a discrepancy between the obtained sensor data and the synthetic sensor data:
obtaining (S114) additional sensor data pertaining to the scene of the physical environment, and
storing (S116) the additional sensor data for subsequent training of the machine learning model.

9. The method (100) according to any one of the claims 1 to 8, wherein the generative model is a generative adversarial network or a diffusion model.

10. A computer program product comprising instructions, which when the program is executed by a computing device, causes the computing device to carry out the method (100) according to any one of the claims 1 to 9.

11. A server (300) for providing insight into a machine learning model, the server (300) comprising control circuitry (302) configured to:
obtain sensor data pertaining to a scene of a surrounding environment of a vehicle equipped with an automated driving system;
obtain, for a machine learning model configured to perform a task of the automated driving system, an internal representation of the sensor data, wherein the internal representation is formed by inputting the sensor data to the machine learning model and extracting the internal representation from said machine learning model, wherein the internal representation of the sensor data is obtained (S104) in response to identifying the scene as a scene of interest; and
generate synthetic sensor data for subsequent comparison with the obtained sensor data, wherein the synthetic sensor data is generated by inputting the internal representation into a generative model trained to generate synthetic sensor data based on internal representations.

12. A computer-implemented method (200), performed by a vehicle equipped with an automated driving system, the method (200) comprising:
in response to detecting a deviating behavior of the vehicle, obtaining (S202) sensor data pertaining to a scene of a surrounding environment at which the deviating behavior was detected, wherein the scene is identified as a scene of interest based on the detected deviation;
determining (S204), for a machine learning model configured to perform a task of the automated driving system, an internal representation of the sensor data, by inputting the sensor data to the machine learning model and extracting the internal representation from said machine learning model; and
transmitting (S206) the sensor data and the internal representation of the sensor data to a server for subsequent generation of synthetic sensor data based on the internal representation.

13. A computer program product comprising instructions, which when the program is executed by a computing device, causes the computing device to carry out the method (200) according to claim 12.

14. A vehicle (400) equipped with an automated driving system (410), the vehicle (400) comprising:
one or more sensors (424); and
control circuitry (404) configured to:
in response to detecting a deviating behavior of the vehicle, obtain sensor data pertaining to a scene of a surrounding environment at which the deviating behavior was detected, wherein the scene is identified as a scene of interest based on the detected deviation;
determine, for a machine learning model configured to perform a task of the automated driving system, an internal representation of the sensor data by inputting the sensor data to the machine learning model and extracting the internal representation from said machine learning model ; and
transmit the sensor data and the internal representation of the sensor data to a server for subsequent generation of synthetic sensor data based on the internal representation.

## Patentansprüche

1. Computerimplementiertes Verfahren (100), durchgeführt in einem Server, zum Bereitstellen eines Einblicks in ein Modell des maschinellen Lernens, wobei das Verfahren (100) Folgendes umfasst:
Erhalten (S102) von Sensordaten, die sich auf eine Szene einer umgebenden Umwelt eines Fahrzeugs beziehen, das mit einem automatisierten Fahrsystem ausgestattet ist;
Erhalten (S104) einer internen Darstellung der Sensordaten für ein Modell des maschinellen Lernens, das dazu konfiguriert ist, eine Aufgabe des automatisierten Fahrsystems durchzuführen, wobei die interne Darstellung durch Eingeben der Sensordaten in das Modell des maschinellen Lernens und Extrahieren der internen Darstellung aus dem Modell des maschinellen Lernens gebildet wird, wobei die interne Darstellung der Sensordaten als Reaktion auf Identifizieren der Szene als eine interessierende Szene erhalten wird (S104); und
Generieren (S106) von synthetischen Sensordaten für einen nachfolgenden Vergleich mit den erhaltenen Sensordaten, wobei die synthetischen Sensordaten durch Eingeben der internen Darstellung in ein generatives Modell, das trainiert ist, um synthetische Sensordaten basierend auf internen Darstellungen zu generieren, generiert werden.

2. Verfahren (100) nach Anspruch 1, wobei die Szene, auf die sich die erhaltenen Sensordaten beziehen, eine interessierende Szene ist.

3. Verfahren (100) nach Anspruch 1 oder 2, wobei die Szene basierend auf einem detektierten abweichenden Verhalten des Fahrzeugs an der Szene als die interessierende Szene identifiziert wird.

4. Verfahren (100) nach Anspruch 3, wobei das abweichende Verhalten eines von einer Aktivierung eines Notbremssystems, einem durch einen Fahrer durchgeführten Ausweichmanöver, einem durch das automatisierte Fahrsystem durchgeführten Ausweichmanöver, einem Fahrvorfall oder einer Benachrichtigung von einem Insassen des Fahrzeugs ist.

5. Verfahren (100) nach einem der Ansprüche 1 bis 4, ferner umfassend Identifizieren (S108) einer oder mehrerer Diskrepanzen zwischen den erhaltenen Sensordaten und den generierten synthetischen Sensordaten basierend auf einem Vergleich davon.

6. Verfahren (100) nach einem der Ansprüche 1 bis 5, wobei die Sensordaten eines oder mehrere von Bilddaten, LIDAR-Daten, Radardaten oder Ultraschalldaten umfassen.

7. Verfahren (100) nach einem der Ansprüche 1 bis 6, ferner umfassend, als Reaktion auf Empfangen einer Angabe einer Diskrepanz zwischen den erhaltenen Sensordaten und den synthetischen Sensordaten:
Zuweisen (S110) von Anmerkungsdaten zu den Sensordaten; und
Speichern (S112) der Sensordaten mit zugewiesenen Anmerkungsdaten für nachfolgendes Trainieren des Modells des maschinellen Lernens.

8. Verfahren (100) nach einem der Ansprüche 1 bis 7, ferner umfassend, als Reaktion auf Empfangen einer Angabe einer Diskrepanz zwischen den erhaltenen Sensordaten und den synthetischen Sensordaten:
Erhalten (S114) zusätzlicher Sensordaten, die sich auf die Szene der physikalischen Umgebung beziehen, und
Speichern (S116) der zusätzlichen Sensordaten für das nachfolgende Trainieren des Modells des maschinellen Lernens.

9. Verfahren (100) nach einem der Ansprüche 1 bis 8, wobei das generative Modell ein Generative Adversarial Network oder ein Diffusionsmodell ist.

10. Computerprogrammprodukt, umfassend Anweisungen, die, wenn das Programm durch eine Rechenvorrichtung ausgeführt wird, die Rechenvorrichtung dazu veranlassen, das Verfahren (100) nach einem der Ansprüche 1 bis 9 auszuführen.

11. Server (300) zum Bereitstellen eines Einblicks in ein Modell des maschinellen Lernens, wobei der Server (300) eine Steuerschaltung (302) umfasst, die zu Folgendem konfiguriert ist:
Erhalten von Sensordaten, die sich auf eine Szene einer umgebenden Umwelt eines Fahrzeugs beziehen, das mit einem automatisierten Fahrsystem ausgestattet ist;
Erhalten einer internen Darstellung der Sensordaten für ein Modell des maschinellen Lernens, das dazu konfiguriert ist, eine Aufgabe des automatisierten Fahrsystems durchzuführen, wobei die interne Darstellung durch Eingeben der Sensordaten in das Modell des maschinellen Lernens und Extrahieren der internen Darstellung aus dem Modell des maschinellen Lernens gebildet wird, wobei die interne Darstellung der Sensordaten als Reaktion auf Identifizieren der Szene als eine interessierende Szene erhalten wird (S104); und
Generieren von synthetischen Sensordaten für einen nachfolgenden Vergleich mit den erhaltenen Sensordaten, wobei die synthetischen Sensordaten durch Eingeben der internen Darstellung in ein generatives Modell, das trainiert ist, um synthetische Sensordaten basierend auf internen Darstellungen zu generieren, generiert werden.

12. Computerimplementiertes Verfahren (200), das durch ein Fahrzeug durchgeführt wird, das mit einem automatisierten Fahrsystem ausgestattet ist, wobei das Verfahren (200) Folgendes umfasst:
Erhalten (S202) von Sensordaten, die sich auf eine Szene einer umgebenden Umwelt beziehen, an der ein abweichendes Verhalten des Fahrzeugs detektiert wurde, als Reaktion auf Detektieren des abweichenden Verhaltens, wobei die Szene basierend auf der detektierten Abweichung als eine interessierende Szene identifiziert wird;
Bestimmen (S204) einer internen Darstellung der Sensordaten für ein Modell des maschinellen Lernens, das dazu konfiguriert ist, eine Aufgabe des automatisierten Fahrsystems durchzuführen, durch Eingeben der Sensordaten in das Modell des maschinellen Lernens und Extrahieren der internen Darstellung aus dem Modell des maschinellen Lernens; und
Übertragen (S206) der Sensordaten und der internen Darstellung der Sensordaten zur nachfolgenden Generierung von synthetischen Sensordaten basierend auf der internen Darstellung an einen Server.

13. Computerprogrammprodukt, umfassend Anweisungen, die, wenn das Programm durch eine Rechenvorrichtung ausgeführt wird, die Rechenvorrichtung dazu veranlassen, das Verfahren (200) nach Anspruch 12 umzusetzen.

14. Fahrzeug (400), das mit einem automatisierten Fahrsystem (410) ausgestattet ist, wobei das Fahrzeug (400) Folgendes umfasst:
einen oder mehrere Sensoren (424); und
eine Steuerschaltung (404), die zu Folgendem konfiguriert ist: Erhalten von Sensordaten, die sich auf eine Szene einer umgebenden Umwelt beziehen, an der ein abweichendes Verhalten des Fahrzeugs detektiert wurde, als Reaktion auf Detektieren des abweichenden Verhaltens, wobei die Szene basierend auf der detektierten Abweichung als eine interessierende Szene identifiziert wird;
Bestimmen einer internen Darstellung der Sensordaten für ein Modell des maschinellen Lernens, das dazu konfiguriert ist, eine Aufgabe des automatisierten Fahrsystems durchzuführen, durch Eingeben der Sensordaten in das Modell des maschinellen Lernens und Extrahieren der internen Darstellung aus dem Modell des maschinellen Lernens; und
Übertragen der Sensordaten und der internen Darstellung der Sensordaten zur nachfolgenden Generierung von synthetischen Sensordaten basierend auf der internen Darstellung an einen Server.

## Revendications

1. Procédé (100) mis en œuvre par ordinateur, réalisé dans un serveur, pour fournir un aperçu de modèles d'apprentissage automatique, le procédé (100) comprenant :
l'obtention (S102) de données de capteur se rapportant à une scène d'un environnement environnant d'un véhicule équipé d'un système de conduite automatisé ;
l'obtention (S104), pour un modèle d'apprentissage automatique configuré pour réaliser une tâche du système de conduite automatisé, d'une représentation interne des données de capteur, la représentation interne étant formée par l'introduction des données de capteur au modèle d'apprentissage automatique et l'extraction de la représentation interne à partir dudit modèle d'apprentissage automatique, la représentation interne des données de capteur étant obtenue (S104) en réponse à l'identification de la scène comme une scène d'intérêt ; et
la génération (S106) de données de capteur synthétiques pour une comparaison ultérieure avec les données de capteur obtenues, les données de capteur synthétiques étant générées par l'introduction de la représentation interne dans un modèle génératif entraîné pour générer des données de capteur synthétiques sur la base de représentations internes.

2. Procédé (100) selon la revendication 1, dans lequel la scène, à laquelle se rapportent les données de capteur obtenues, est une scène d'intérêt.

3. Procédé (100) selon la revendication 1 ou 2, dans lequel la scène est identifiée comme la scène d'intérêt sur la base d'un comportement déviant détecté du véhicule au niveau de la scène.

4. Procédé (100) selon la revendication 3, dans lequel le comportement déviant est l'un parmi une activation d'un système de freinage d'urgence, une manœuvre d'évitement réalisée par un conducteur, une manœuvre d'évitement réalisée par le système de conduite automatisé, un incident de conduite, ou une notification provenant d'un occupant du véhicule.

5. Procédé (100) selon l'une quelconque des revendications 1 à 4, comprenant en outre l'identification (S108) d'une ou plusieurs divergences entre les données de capteur obtenues et les données de capteur synthétiques générées sur la base d'une comparaison de celles-ci.

6. Procédé (100) selon l'une quelconque des revendications 1 à 5, dans lequel les données de capteur comprennent une ou plusieurs parmi des données d'image, des données LIDAR, des données radar ou des données ultrasonores.

7. Procédé (100) selon l'une quelconque des revendications 1 à 6, comprenant en outre, en réponse à la réception d'une indication d'une divergence entre les données de capteur obtenues et les données de capteur synthétiques :
l'attribution (S110) de données d'annotation aux données de capteur ; et
le stockage (S112) des données de capteur avec les données d'annotation attribuées pour un entraînement ultérieur du modèle d'apprentissage automatique.

8. Procédé (100) selon l'une quelconque des revendications 1 à 7, comprenant en outre, en réponse à la réception d'une indication d'une divergence entre les données de capteur obtenues et les données de capteur synthétiques :
l'obtention (S114) de données de capteur supplémentaires se rapportant à la scène de l'environnement physique, et
le stockage (S116) des données de capteur supplémentaires pour un entraînement ultérieur du modèle d'apprentissage automatique.

9. Procédé (100) selon l'une quelconque des revendications 1 à 8, dans lequel le modèle génératif est un réseau antagoniste génératif ou un modèle de diffusion.

10. Produit de programme informatique comprenant des instructions qui, lorsque le programme est exécuté par un dispositif informatique, amènent le dispositif informatique à réaliser le procédé (100) selon l'une quelconque des revendications 1 à 9.

11. Serveur (300) pour fournir un aperçu de modèles d'apprentissage automatique, le serveur (300) comprenant un circuit de commande (302) configuré pour :
obtenir des données de capteur se rapportant à une scène d'un environnement environnant d'un véhicule équipé d'un système de conduite automatisé ;
obtenir, pour un modèle d'apprentissage automatique configuré pour réaliser une tâche du système de conduite automatisé, une représentation interne des données de capteur, la représentation interne étant formée par l'introduction des données de capteur au modèle d'apprentissage automatique et l'extraction de la représentation interne à partir dudit modèle d'apprentissage automatique, la représentation interne des données de capteur étant obtenue (S104) en réponse à l'identification de la scène comme une scène d'intérêt ; et
générer des données de capteur synthétiques pour une comparaison ultérieure avec les données de capteur obtenues, les données de capteur synthétiques étant générées par l'introduction de la représentation interne dans un modèle génératif entraîné pour générer des données de capteur synthétiques sur la base de représentations internes.

12. Procédé (200) mis en œuvre par ordinateur, réalisé par un véhicule équipé d'un système de conduite automatisé, le procédé (200) comprenant :
en réponse à la détection d'un comportement déviant du véhicule, l'obtention (S202) de données de capteur se rapportant à une scène d'un environnement environnant au niveau de laquelle le comportement déviant a été détecté, la scène étant identifiée comme une scène d'intérêt sur la base de la déviation détectée ;
la détermination (S204), pour un modèle d'apprentissage automatique configuré pour réaliser une tâche du système de conduite automatisé, d'une représentation interne des données de capteur, par l'introduction des données de capteur au modèle d'apprentissage automatique et l'extraction de la représentation interne à partir dudit modèle d'apprentissage automatique ; et
la transmission (S206) des données de capteur et de la représentation interne des données de capteur à un serveur pour une génération ultérieure de données de capteur synthétiques sur la base de la représentation interne.

13. Produit de programme informatique comprenant des instructions qui, lorsque le programme est exécuté par un dispositif informatique, amènent le dispositif informatique à réaliser le procédé (200) selon la revendication 12.

14. Véhicule (400) équipé d'un système de conduite automatisé (410), le véhicule (400) comprenant :
un ou plusieurs capteurs (424) ; et
un circuit de commande (404) configuré pour :
en réponse à la détection d'un comportement déviant du véhicule, obtenir des données de capteur se rapportant à une scène d'un environnement environnant au niveau de laquelle le comportement déviant a été détecté, la scène étant identifiée comme une scène d'intérêt sur la base de la déviation détectée ;
déterminer, pour un modèle d'apprentissage automatique configuré pour réaliser une tâche du système de conduite automatisé, une représentation interne des données de capteur par l'introduction des données de capteur au modèle d'apprentissage automatique et l'extraction de la représentation interne à partir dudit modèle d'apprentissage automatique ; et
transmettre les données de capteur et la représentation interne des données de capteur à un serveur pour une génération ultérieure de données de capteur synthétiques sur la base de la représentation interne.
